# EUROPÄISCHE PATENTSCHRIFT

(11) **EP 1 997 688 B1**
(45) Veröffentlichungstag und Bekanntmachung des Hinweises auf die Patenterteilung: **04.01.2012**
(21) Anmeldenummer: 08466011.7
(22) Anmeldetag: 14.05.2008
(51) Int. Cl.: B60R 19/00, B60K 5/12

(54) **Einrichtung für Absorption der Kräfte bei Fahrzeugaufprall**
Device for absorbing forces involved in a car collision
Dispositif pour l'absorption des forces en cas de collision

(30) Priorität: 30.05.2007 CZ 20070375
(43) Veröffentlichungstag der Anmeldung: 03.12.2008
(73) Patentinhaber: Skoda Auto a.s., 293 60 Mladá Boleslav (CZ)
(72) Erfinder: Pavlicek, Jan, 29301 Mlada Boleslav (CZ); Krubl, Robert, 29431 Krnsko (CZ)

(56) Entgegenhaltungen:
- DE-A1- 3 710 808
- DE-A1- 4 313 785
- DE-A1- 10 007 789
- FR-A- 2 504 864
- US-B1- 6 276 484

## Beschreibung

### Bereich der Technik

Die Erfindung betrifft Einrichtung für Absorption der Kräfte bei Fahrzeugaufprall.

### Bestehender Stand der Technik

Zurzeit ist vom Stand der Technik die Lösung bekannt, wann das Fahrzeug mit Deformationselement für Absorption der Kräfte bei Fahrzeugaufprall ausgerüstet ist. Deformationselement wird durch abgerundete Stahlkufe gebildet, die mit Stahlgusstell durch Schraube verbunden ist. Diese Baugruppe ist dann mittels Schrauben von unten zum starrsten Getriebeteil befestigt, wodurch unter Mitwirkung mit vorderem Achsträger der erforderlichen Absorption der Kräfte erzielt wird.

Weiterer Stand der Technik ist aus der Patentdokumenten US 6,276,481 B1, FR 2504864, DE 4313785 A1, DE 3710808 A1 und DE 100 07 789 A1 bekannt.

Aus US 6,276,481 sind die Merkmale des Oberbegriffs des Anspruchs 1 bekannt.

Nachteil dieser Lösungen ist hoher Gewlchtszuwachs, komplizierte Montage und unzureichende Funktionalität und Wirksamkeit.

### Wesenheit der Erfindung

Angeführte Nachteile beseitigt die Einrichtung für Absorption der Kräfte bei Fahrzeugaufprall, meistens in Form eines Schmiedestücks, das zum Antriebsaggregat befestigt ist. Prinzip der Funktion der Einrichtung für Absorption der Kräfte bei Fahrzeugaufprall besteht darin, dass nach Frontalanprall des Fahrzeugs ins Hindernis zur Bewegung des Aggregats kommt und daher auch Aufprallabsorbers gegen Fahrtrichtung des Fahrzeugs. Der Absorber ist so konstruiert, dass bei dieser Bewegung zu dessen Aufprall in den Achsträger, dessen folgender Deformation und daher der gewünschten Absorption der Energie des sich bewegenden Aggregats kommt.

Einrichtung für Absorption der Kräfte bei Fahrzeugaufprall besteht aus Aufprallabsorber, der durch Flansch, Stützteil Verbindungsteil und Deformationselement gebildet ist. Der Aufprallabsorber ist zum Antriebsaggregat mittels Flansches befestigt. Das Deformationselement hat die Form eines Vierecks mit abgerundeten Ecken und konkaven Seiten, wobei durch eine Ecke mit Stützteil verbunden ist und mit gegenüberliegender Ecke (100) gegen den Achsträger richtet.

Vorteil dieser Lösung ist niedrigeres Gewicht, einfache Montage auch in bestehenden Befestigungspunkten und Einbau.

### Übersicht der Abbildungen auf den Zeichnungen

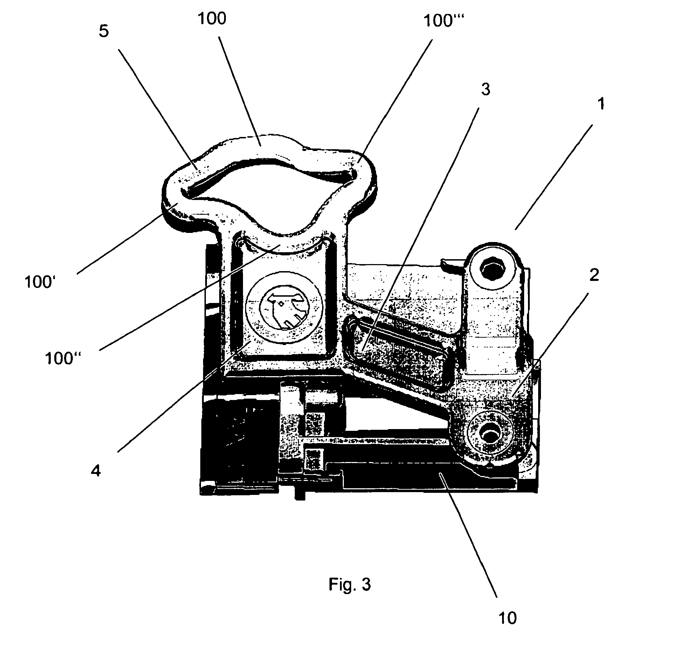

Auf der Abb. 1 ist der Aufprallabsorber, auf der Abb. 2 die Einrichtung für Absorption der Kräfte bei Fahrzeugaufprall dargestellt. Abb. 3 stellt den Aufprallabsorber resp. Deformationselement nach Aufprall des Fahrzeugs dar.

### Beispiel der Ausführung der Erfindung

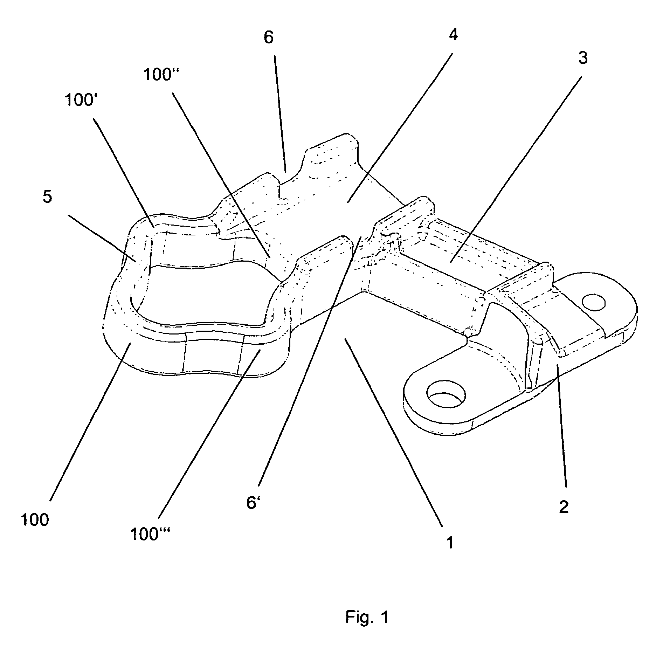

Die Einrichtung für Absorption der Kräfte bei Fahrzeugaufprall wird durch Aufprallabsorber 1 gebildet, der zum Antriebsaggregat 10 befestigt ist und das Deformationselement 5 enthält.
Auf Abb. 1 ist die Ansicht auf Aufprallabsorber 1 von der Seite dargestellt, die zum Antriebsaggregat 10 anliegt, der durch Flansch 2, Verbindungsteil 3, Stützteil 4 und Deformationselement 5 gebildet ist.

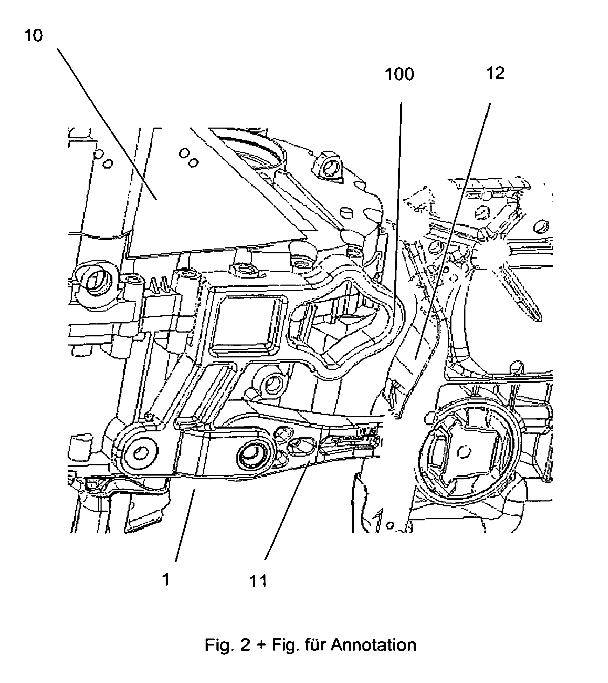

Abb. 2 stellt den Aufprallabsorber 1 dar, der zum Antriebsaggregat 10 mittels Flansches 2 befestigt ist. In günstiger Ausführung werden die bestehenden Montagepunkte ausgenutzt und der Absorber 1 ist zusammen mit Momentstrebe 11 durch zwei Schrauben zum Antriebsaggregat 10 befestigt.

Das Deformationselement 5 hat die Form eines Vierecks mit abgerundeten Ecken und konkaven Seiten, wobei durch eine Ecke 100" mit Stützteil 4 verbunden ist und mit gegenüberliegender Ecke 100 gegen den Achsträger 12 richtet. Es ist so konstruiert, dass es nach Aufprall des Absorbers 1 in den Achsträger 12 bei Bewegung des Aggregats 10 zunehmenden Widerstand leistet.

Der Aufprallabsorber 1 ist in Form eines Aluminiumschmiedestücks ausgeführt.

Der Stützteil 4 des Aufprallabsorbers 1 ist mit Ausnehmungen 6, 6' versehen, in welche die Verrippung des Antriebsaggregats 10 hinein greift. Dies unterstützt die Wirkung der Stemmung des Absorbers 1 beim Aufprall auf den Achsträger 12.

### Industrielle Nutzbarkeit

Einrichtung für Absorption der Kräfte bei Fahrzeugaufprall nach der Erfindung kann in allen Landradfahrzeugen ausgenutzt werden.

### Verwendete Kennzeichnung

- 1: Aufprallabsorber
- 2: Flansch
- 3: Verbindungsteil
- 4: Stützteil
- 5: Deformationselement
- 6,6': Ausnehmungen

- 10: Antriebsaggregat
- 11: Momentstrebe
- 12: Achsträger

- 100, 100', 100", 100"': Ecken des Deformationselements

## Patentansprüche

1. Einrichtung für Absorption der Kräfte bei Fahrzeugaufprall bestehend aus Aufprallabsorber (1), der durch Flansch (2), Stützteil (4) und Deformationselement (5) gebildet ist, wobei der Aufprallabsorber (1) zum Antriebsaggregat (10) mittels Flansches (2) befestigt ist **gekennzeichnet dadurch, dass** das Deformationselement (5) die Form eines Vierecks mit abgerundeten Ecken und konkaven Seiten, wobei durch eine Ecke (100") mit Stützteil (4) verbunden ist und mit gegenüberliegender Ecke (100) gegen den Achsträger (12) richtet und dass der Aufprallabsorber (1) weiterhin über ein Verbindungsteil (3) gebildet ist.

2. Einrichtung für Absorption der Kräfte bei Fahrzeugaufprall nach Anspruch 1, **gekennzeichnet dadurch, dass** der Aufprallabsorber (1) In Form eines Aluminiumschmiedestücks ausgeführt ist.

3. Einrichtung für Absorption der Kräfte bei Fahrzeugaufprall nach vorherigen Ansprüchen, **gekennzeichnet dadurch, dass** der Stützteil (4) des Aufprallabsorbers (1) mit Ausnehmungen (6, 6') versehen ist.

## Claims

1. Device for absorbing forces involved in a car crash, the device consisting of an impact absorber (1) which is formed by a flange (2), supporting part (4) and deformation element (5), wherein the impact absorber (1) is fastened to the drive unit (10) by means of a flange (2), **characterized in that** the deformation element (5) is in the form of a square with rounded corners and concave sides, is connected by one corner (100") to the supporting part (4) and is directed at the opposite corner (100) towards the axle bracket (12), and **in that** the impact absorber (1) is furthermore formed via a connecting part (3).

2. Device for absorbing forces involved in a car crash according to Claim 1, **characterized in that** the impact absorber (1) is designed in the form of an aluminium forged component.

3. Device for absorbing forces involved in a car crash according to the preceding claims, **characterized in that** the supporting part (4) of the impact absorber (1) is provided with recesses (6, 6').

## Revendications

1. Dispositif pour l'absorption des forces en cas de collision d'un véhicule, constitué d'un absorbeur de chocs (1) qui est formé par une bride (2), une partie de support (4) et un élément de déformation (5), l'absorbeur de chocs (1) étant fixé par rapport au groupe motopropulseur (10) au moyen de la bride (2), **caractérisé en ce que** l'élément de déformation (5) a la forme d'un carré à coins arrondis et côtés concaves, est connecté par un coin (100") à la partie de support (4) et est orienté vers le support d'essieu (12) avec son coin opposé (100), et **en ce que** l'absorbeur de chocs (1) est en outre formé par le biais d'une pièce de connexion (3).

2. Dispositif pour l'absorption des forces en cas de collision d'un véhicule selon la revendication 1, **caractérisé en ce que** l'absorbeur de chocs (1) est réalisé en forme de pièce forgée en aluminium.

3. Dispositif pour l'absorption des forces en cas de collision d'un véhicule selon les revendications précédentes, **caractérisé en ce que** la partie de support (4) de l'absorbeur de chocs (1) est pourvue d'évidements (6, 6').
